# FASCICULE DE BREVET EUROPEEN

(11) **EP 2 921 920 B1**
(45) Date de publication et mention de la délivrance du brevet: **08.03.2017**
(21) Numéro de dépôt: 15152988.0
(22) Date de dépôt: 29.01.2015
(51) Int. Cl.: G05B 19/05

(54) **Méthode d'implémentation d'un système d'automatisation**
Methode zur Umsetzung eines Automatisierungssystems
Method for implementing an automation system

(30) Priorité: 30.01.2014 BE 201400050
(43) Date de publication de la demande: 23.09.2015
(73) Titulaire: Petit, Jean-Pierre, 1390 Grez-Doiceau (BE)
(72) Inventeur: Petit, Jean-Pierre, 1390 Grez-Doiceau (BE)
(74) Mandataire: Office Kirkpatrick

(56) Documents cités:
- US-A1- 2003 167 096
- US-B1- 7 324 856

## Description

### Domaine de l'invention

L'invention ci décrite se rapport généralement à des systèmes d'automatisation produits en série pour des procédés de fabrication avec à la fois un contrôle local et distant, un suivi en continu, des graphiques temps réels et des alarmes dont la personnalisation sur site ne nécessite aucune modification de logiciel quel qu'il soit.

### Etat de la technique

Jusqu'à ce jour, la programmation traditionnelle de systèmes d'automatisation était réalisée à travers des outils de programmation spécifiques à chaque type et marque de PLC ou d'interface homme-machine. Une telle méthode de programmation nécessite de grandes compétences techniques et une formation spécifique par type/marque de systèmes d'automatisation. De plus, chaque procédé possède ses propres caractéristiques et dès lors requiert une analyse de procédé approfondie de la part du développeur de projet et ce bien avant de commencer à programmer l'application.

Les techniques traditionnelles de programmation pour PLC ou interface homme-machine ne permettent dès lors pas de créer des produits en série de telle sorte qu'il est impossible d'imaginer un système programmé d'usine dont la personnalisation sur site pourrait se réaliser sans code additionnel, sans outil de programmation et serait accessible à tout opérateur de terrain sans compétence de programmation et ce, sans risque d'erreur et en offrant toute flexibilité de personnalisation.

L'art antérieur, tel par exemple les documents US,7,324,856 et US,6,799,080, a montré différents essais de simplification de la tâche de programmation grâce à l'emploi d'un assistant de programmation tournant sur une machine de programmation externe (tel un Ordinateur spécifique). Ce type d'assistant est créé pour un type/marque donnée de systèmes d'automatisation et permet à des programmeurs de bon niveau de programmer des algorithmes et bases de données personnalisées à un procédé, de compiler le code généré en code machine et de le charger hors ligne vers la machine-cible.

Une telle approche dans US,7,324,856 et US,6,799,080, est, bien évidemment, un pas en avant vers le système idéal mais elle souffre de la lourdeur d'utilisation d'un outil de développement dédicacé à un type/marque de matériel, du coût des compilateurs utilisés par l'assistant de programmation, du temps nécessaire à la compilation et du téléchargement du code vers la machine cible, des risques de perturbations de contrôle de procédé lors du redémarrage du système cible et du manque de flexibilité lors d'adaptations du procédé à contrôler. En résumé, de telles assistants de programmation ne diffèrent pas fondamentalement de la programmation réalisée au coup par coup telle que des milliers de sociétés d'automatisation la pratiquent actuellement et en finalité n'aident pas réellement le client final qui cherche la simplicité de mise en oeuvre, la sécurité, la flexibilité et la personnalisation instantanée du système de contrôle à son procédé.

Le brevet WO2013113320 se rapporte à un procédé destiné à modifier un programme de PLC par l'intermédiaire d'un logiciel de compilation installé sur une machine externe et de transférer le nouveau code PLC généré. Un tel système nécessite la génération d'un nouveau code source à chaque modification du contrôle avec toute la complexité des opérations intermédiaires, les risques d'erreurs de compilation, d'éventuelles perturbations de contrôle de procédé et les conséquences sur le procédé lui-même.

### Résumé de l'invention

Etant donné les importantes limitations rapportées dans le chapitre de l'art antérieur, le but de l'invention décrite ci-après est de fournir un système d'automatisation prêt à l'emploi qui se compose typiquement d'un contrôleur de programmation logique (PLC) et d'une interface homme-machine (HMI), de préférence inclus dans la même armoire de contrôle, les deux composants étant préprogrammés d'usine de telle façon que des déploiements de grandes séries de tels produits et leur personnalisation peuvent être réalisés sur site sans aucun changement de code ni qu'aucune programmation de quelle que sorte ne soit nécessaire pour permettre de faire tourner le système sur le procédé choisi.

A cette fin, l'objet de l'invention est une méthode d'implémentation d'un système d'automatisation pour la configuration instantanée sans aucune étape préliminaire de développement ou de compilation et la mise en oeuvre d'un contrôleur de programmation logique (PLC) à la façon d'un contrôleur en temps réel de procédé virtuel comprenant les étapes suivantes :
- Allouer un premier espace mémoire dans la mémoire de travail du PLC au stockage permanent de modules de code exécutable, lesdits modules de code exécutable étant exécutés de façon continue et comprenant au moins un algorithme de contrôle de procédé ;
- Allouer un second espace mémoire de taille fixe dans la mémoire du PLC au stockage d'une base de données de canaux virtuels de procédé comprenant l'environnement d'exécution desdits modules de code exécutable, lesdits canaux virtuels de procédé liant des sources de données de procédé auxdits modules de code exécutable, les canaux virtuels étant initialisés avec des valeurs permettant un mode opératoire fonctionnel du système d'automatisation même si le PLC n'est pas physiquement connecté aux sources de données du procédé;
- Permettre une paramétrisation en temps réel des canaux virtuels de procédé en fournissant un accès vers ladite base de données des canaux virtuels de procédé, ladite paramétrisation étant restreinte à un certain nombre d'opérations licites qui lient lesdits modules de code à des sources de données de procédé compatibles et ladite paramétrisation n'entrainant pas de génération de code exécutable ni d'extension du second espace mémoire (3, A11) ;
- Synchroniser en temps réel la mémoire de travail du PLC avec un module électronique qui comprend une zone de mémoire de données et une zone de mémoire de code exécutable, ledit module électronique se comportant comme une interface homme-machine entre un opérateur et le PLC, ladite synchronisation conduisant à une paramétrisation de la zone mémoire de données dudit module électronique, ladite paramétrisation adaptant l'interface homme-machine selon la configuration du PLC ;
- Mettre en oeuvre les modules de code liés aux sources de données de procédé décrites à la troisième étape.

Par l'environnement d'exécution desdits modules de code exécutable, on entend l'ensemble des paramètres (entrées-sorties physiques ou paramètres internes) nécessaires à la mise en oeuvre des modules de code exécutable.

Un autre objet de l'invention est un PLC qui implémente la méthode détaillée ci-dessus ou toute variation de celle-ci décrite dans la suite du texte.

La configuration du PLC par la méthode selon l'invention peut donc s'effectuer sans aucune étape préliminaire de développement ou de compilation. L'allocation d'espaces mémoire distincts du PLC au stockage permanent de modules de code exécutable et au stockage de canaux virtuels de procédé, effectuée lors de l'initialisation du PLC avant la distribution de celui-ci aux utilisateurs finaux, offre en effet une flexibilité et une personnalisation dans la mise en oeuvre des fonctionnalités du PLC, tout en ne nécessitant aucune génération de nouveau code exécutable et ce grâce à la paramétrisation ultérieure des canaux virtuels de procédé accessible à l'utilisateur. Cette implémentation est à l'origine d'une grande simplicité de configuration et d'une grande fiabilité de mise en oeuvre pour l'utilisateur final du PLC selon l'invention.

L'invention décrite offre à des utilisateurs de procédés industriels ou municipaux un système de contrôle très universel, préprogrammé d'usine et totalement personnalisable sur site sans nécessiter aucune connaissance spécifique d'automatisation ou de programmation et typiquement sera personnalisé par le client final lui-même.

Une telle facilité de personnalisation a été rendue possible par la conception unique de canaux de procédé virtuels prédéfinis dans le PLC qui jouent le rôle de « liens » flexibles entre le procédé (entrées-sorties physiques, données de bus de terrain ou liaisons asynchrones) et les modules de contrôle pré-chargés dans le système. Au moment de la personnalisation, les liens virtuels sont physiquement définis et permettent aux canaux de données et aux fonctions de contrôle de s'appliquer au procédé contrôlé.

Un canal virtuel de procédé est donc caractérisé par un jeu structuré de variables stockées dans la mémoire de travail du PLC apte à être traité par les différents modules de codes sélectionnés et en même temps à être relié aux sources de données de procédé que sont les entrées/sorties, les données des bus de terrain ou le données du procédé transitant par des liaisons asynchrones. Une telle structure de canal virtuel peut être définie pour les différents types de canaux nécessaires au fonctionnement des modules de contrôle du PLC.

L'interface entre les sources de données de procédé et les modules de contrôle pré chargés dans le PLC que permet l'utilisation des canaux virtuels offre une large flexibilité et une polyvalence dans les tâches de contrôle implémentées dans le PLC. Avant l'étape de personnalisation du système d'automatisation, qui consiste en simples mots à 'alimenter' les modules de contrôles avec des données de procédé, ces mêmes modules sont effectivement déjà exécutés en continu dès la première mise en marche du système en sortie de production d'usine et de ce fait sont testés en continu et opérationnels sans connexion effective avec le procédé. Ils n'attendent plus que le basculement effectif des canaux virtuels vers des données sources physiques de procédé pour se connecter au procédé. En conséquence, le PLC qui supporte la méthode d'implémentation décrite dans l'invention est totalement sécurisé puisque toutes ces fonctionnalités tournent en permanence en mode défaut-virtuel et se testent spontanément même si physiquement ils ne sont pas encore reliés à une donnée source physique du procédé.

L'implémentation de canaux virtuels permet également un mode opératoire de type manuel qui consiste à simuler des entrées physiques (éventuellement non disponibles) par des entrées manuelles de valeurs opérées par l'opérateur via l'interface homme-machine. Ce mode de fonctionnement est particulièrement utile lorsque l'opérateur désire évaluer la réponse du PLC à certaines conditions de procédé difficiles à reproduire en temps réel. Les canaux virtuels se comportent dans ce cas comme un laboratoire virtuel de procédé. Il permet également de poursuivre une mise en service lorsque certains signaux câblés ne sont pas encore disponibles en les replaçant par des valeurs manuelles entrées au coup par coup.

L'adaptation de l'interface homme-machine (HMI) à la configuration du PLC signifie que cette interface HMI va uniquement afficher l'information pertinente au vu de la configuration établie durant la phase de personnalisation des canaux virtuels.

Suivant un mode de réalisation sécurisé, les opérations licites à l'étape de paramétrisation sont vérifiées en continu par une fenêtre de consistance qui vérifie les données entrées dans la base de données de canaux virtuels de procédé en empêchant tout encodage erroné ou illicite et en conséquence protège de la sorte entièrement l'intégrité opérationnelle du PLC.

Des opérations autorisées consistent en opérations qui ne risquent pas de produire des inconsistences dans la paramétrisation des canaux virtuels et dans le mode opératoire des modules de code. De telles inconsistences incluent par exemple des opérations de divisions par zéro ou des débordements de valeurs, des échelles de signaux électriques illicites pour les entrées sorties, ou l'assignation d'un canal virtuel vers une adresse physique matérielle incorrecte.

Suivant un mode de réalisation compatible avec les précédents, lesdites sources de données de procédé comprennent des entrées sorties physiques, des données transitant par bus de terrain Profibus ou liaison asynchrone Modbus, une valeur calculée par ledit moteur de calcul, des entrées manuelles de l'opérateur ou toute combinaison des précédents.

Suivant un autre mode de réalisation compatible avec les précédents, lesdits modules de code comprennent au moins un des modules suivants : un moteur de calcul, un module de vérification de débit et un module de gestion d'alarmes.

Suivant un mode de réalisation particulier, les valeurs calculées par ledit moteur de calcul sont évaluées de façon cyclique selon un intervalle de temps défini par l'utilisateur.

Suivant un autre mode de réalisation compatible avec les précédents, la paramétrisation des canaux virtuels s'effectue via une méthode de guidance assistée.

Suivant un autre mode de réalisation compatible avec les précédents, les modules de code ainsi que l'exécution du contrôle de procédé ne sont pas perturbés ni interrompus durant l'étape de paramétrisation.

Suivant un autre mode de réalisation compatible avec les précédents, les modules de code comprennent un module de régulation qui adapte le point de consigne de dosage d'un produit liquide en fonction d'au moins un des paramètres variables suivants: la densité du produit dosé, la température du dit produit, la tension électrique d'alimentation de la pompe de dosage, la pression amont/aval dudit produit et la tuyauterie du circuit de dosage.

Suivant un autre mode de réalisation compatible avec les précédents, le PLC se connecte de façon autonome à un réseau composé de jusqu'à 8 PLC et est automatiquement reconnu par l'interface homme-machine du réseau via un bus de données de terrain dédicacé. Des messages pré-formatés de données sont échangés entre les stations détectées et permettent des échanges de données personnalisables.

Suivant un autre mode de réalisation compatible avec les précédents, la paramétrisation des canaux de procédé virtuels de procédé (A5) est effectuée via les fonctionnalités d'une technique OLE (Object link embedded) pour contrôle de procédé.

Suivant encore un autre mode de réalisation compatible avec les précédents, la paramétrisation de la zone de mémoire de données du module électronique agissant comme interface homme-machine consiste en la réplication des canaux virtuels stockés dans l'espace mémoire du PLC.

Suivant encore un autre mode de réalisation compatible avec les précédents, le module électronique servant d'interface homme-machine est intégré au PLC dans une même armoire électrique comprenant un écran. Suivant un autre mode de réalisation, le module électronique servant d'interface homme-machine est un ordinateur personnel connecté au PLC.

La méthode d'implémentation est par définition indépendante de la marque de matériel installée ou choisie ce qui signifie qu'aucun outil spécifique de programmation, ni formation spécifique pour l'opérateur n'est requise sur site. Une flexibilité totale existe au niveau du matériel retenu par le client final puisque le code chargé en usine est compatible IEEE et dès lors peut être chargé sur toute plateforme matérielle PLC au moment de la production en usine.

La mise en oeuvre sur site de ce système d'automatisation est instantanée puisque toutes les fonctionnalités disponibles à la fois au niveau du PLC et de l'interface homme-machine sont en mode exécuté dès leur première mise en marche du système en sortie de production d'usine et de ce fait sont testées en continu et opérationnels sans connexion effective avec le procédé. Ils n'attendent plus que le basculement effectif des canaux virtuels vers des données sources physiques de procédé pour se connecter au procédé. L'étape de configuration du système d'automatisation est une opération qui se déroule entièrement en ligne et ne requiert aucun temps d'arrêt de la machine, aucun redémarrage ou réinitialisation des modules électroniques.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
La Fig. 1 représente la vue explosée de l'architecture en réseau du RTGAS (Système d'automatisation prêt à l'emploi) et inclut l'allocation mémoire pour les équipements RTGPLC (PLC prêt à l'emploi) et RTGHMI (interface homme machine prêt à l'emploi).
La Fig. 2 représente les détails des 2 architectures constitutive du RTGPLC et RTGHMI avec les détails des composants au coeur de la structure des canaux virtuels effectuant le lien entre les sources de données de procédé et les modules de codes pré programmés dans la mémoire de code du système exécutés en mode 'non alloué'.
La Fig.3 représente un jeu de paramètres typique de canal virtuel (analogique)
La Fig.4 représente un exemple de feuille de configuration pour canaux booléens.
La Fig. 5 représente un exemple d'assistant de configuration de canal analogique
La Fig. 6 représente un exemple d'assistant de configuration d'un module de contrôle proportionnel, intégral, dérivé (PID)
La Fig. 7 représente un exemple d'assistant de configuration de canal du moteur de calcul.
La Fig. 8 représente un exemple d'assistant de configuration de canal à multi-courbes.

Les figures ne sont pas dessinées à l'échelle .En général, des composants identiques sont repérés par des références numériques identiques dans les schémas.

### Description détaillée de modes de réalisation particuliers

L'invention décrite offre à des utilisateurs de procédés industriels ou municipaux un système de contrôle très universel, préprogrammé d'usine et totalement personnalisable sur site sans nécessiter aucune connaissance spécifique d'automatisation ou de programmation et typiquement sera personnalisé par le client final lui-même.

Cette personnalisation inclut non seulement les fonctionnalités de contrôle (8 contrôleurs par système) mais également les vues de procédés, les courbes de tendance et les écrans d'alarmes disponibles sur l'interface homme-machine.

Jusqu'à 8 systèmes (armoires de contrôle) peuvent être mis spontanément en réseau et échanger un certain nombre de données configurables entre elles. De la même façon que pour un système unique, les écrans de suivi de procédé peuvent être partagés entre les systèmes bien que de façon typique un écran localisé centralement collecte et affiche l'ensemble des données typiquement dans une salle de contrôle surveillée par une présence continue d'opérateurs.

Une telle facilité de personnalisation a été rendue possible par la conception unique de canaux de procédé virtuels prédéfinis dans le PLC qui jouent le rôle de « liens » flexibles entre le procédé (Entrées sorties physiques, données de bus de terrain ou liaisons asynchrones) et les modules de contrôle pré chargés dans le système. Au moment de la personnalisation, les liens virtuels sont physiquement définis and permettent des canaux de données et des fonctions de contrôle de s'appliquer au procédé contrôlé.

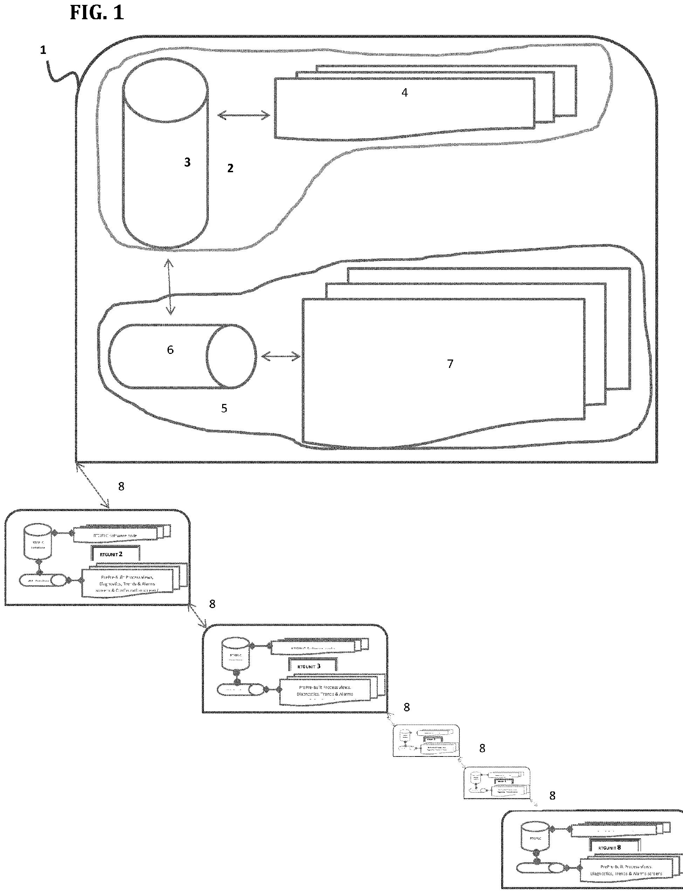

La Fig.1 définit le RTGAS (système d'automatisation prêt à l'emploi) qui supporte la méthode d'implémentation selon un des modes de réalisation de l'invention, les composants matériels et logiciels de l'invention nommés RTGPLC 2(PLC prêt à l'emploi) ainsi que la zone mémoire générale faite d'une zone de mémoire de données 3 et d'une zone de mémoire de code 4. Cet équipement RTGPLC est intimement lié à un RTGHMI 5 (interface homme-machine prête à l'emploi) ainsi que sa mémoire faite d'une mémoire de données 6 et d'une mémoire de code 7. Ces composants sont entièrement programmés and configurés durant l'étape de production ce qui rend possible la livraison sur site d'un système pleinement opérationnel en mode d'exécution de code avec une mémoire entièrement configurée. Un réseau de 8 stations RTGAS reliées par un bus de terrain (différents protocoles sont disponibles, comme par exemple Profibus ou Modbus) est également figuré.

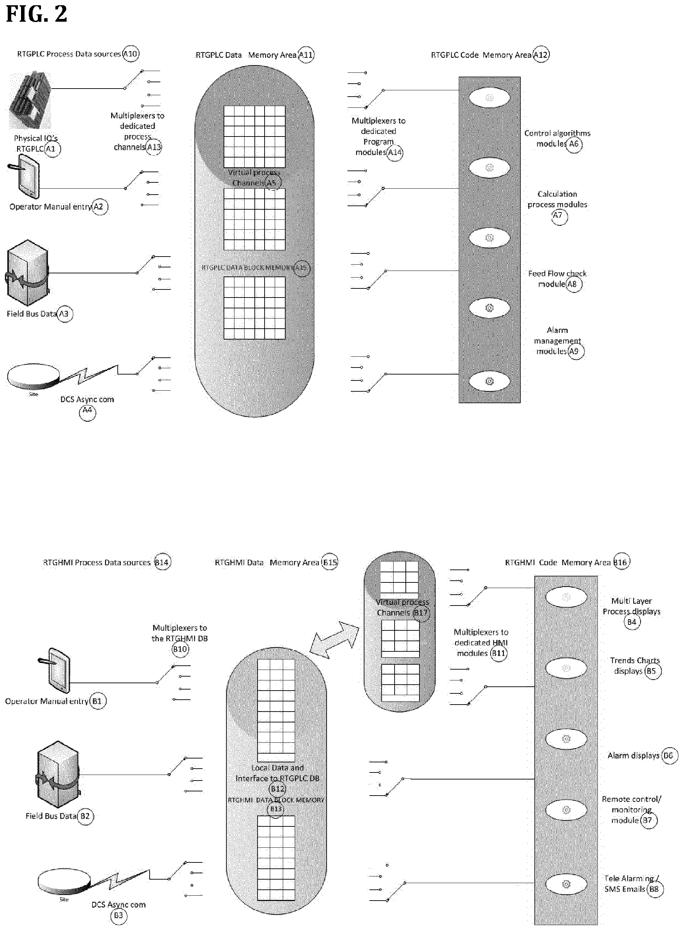

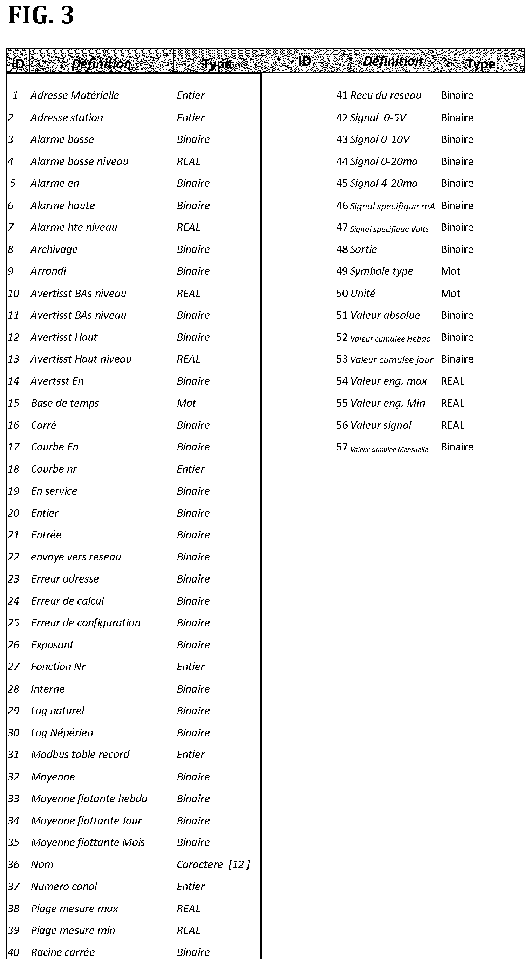

La Fig. 2 représente un mode de réalisation de l'invention dans un environnement de procédé. Le premier schéma se réfère au composant RTGPLC (PLC prêt à l'emploi). Les sources de données A10 du RTGPLC peuvent soit provenir d'entrées/sorties génériques A1, soit d'entrées manuelles de l'opérateur A2, soit de bus de terrain A3 ou encore de données reçues via les drivers asynchrones venant de DCS externes. Ces données sont personnalisées grâce à une feuille de calcul adaptée qui se réfère aux canaux virtuels A2 pré-chargés dans la mémoire du RTGPLC A11. Cette opération est réalisée via un multiplexeur logiciel A13 qui fait partie de cette invention. Un exemple de canal virtuel de procédé est présenté en Fig. 3 et sera explicité plus tard dans ce document. Dès le moment où le flux de données a été établi et personnalisé, les canaux respectifs peuvent être reliés aux algorithmes de contrôle respectifs situés dans la mémoire de code A12 du RTGPLC via les multiplexeurs logiciels A14. Ces modules couvrent les différentes fonctionnalités de l'invention et notamment les algorithmes de contrôle A6, le moteur de calcul A7, le module de contrôle de débit A8 ou le module de gestion des alarmes A9.

Il est important de noter que toutes les sources de données A10 tout comme les canaux virtuels A5, modules de contrôle A6, A7, A8 et A9 sont pré-chargés au moment de la production et dès lors livrés à l'utilisateur en mode exécuté de telle façon que l'unité est pleinement opérationnelle quand elle arrive sur site.

L'étape de personnalisation consiste dès lors uniquement en activant les liens du multiplexeur venant et partant des canaux virtuels ou en mots plus simples d'alimenter les modules de fonction en données temps réel de procédé à la place des canaux virtuels définis à l'étape de production.

Ceci signifie également que ni l'utilisation de la mémoire du RTGPLC ni le temps d'exécution du RTGPLC ne seront impacté par la personnalisation de l'unité puisque toutes les fonctions sont activées déjà au premier démarrage.
Une conséquence directe de cette invention réside dans le fait qu'il n'existe virtuellement aucun risque de fonctionnement inconsistant du système d'automatisation, ni aucun risque d'arrêt ou de perturbation du procédé soit avant durant ou après la personnalisation puisque aucun code nouveau ou nouvelles zones de données ne sont ajoutés au chargement initial de la mémoire du système.
Le second schéma de la Fig 2 correspond au RTGHMI. Les sources de données B14 du RTGHMI peuvent être faites soit d'entrées manuelles d'opérateur, ou de données issues d'un bus de terrain B2 ou encore de données venant de drivers intégrés de systèmes de supervisions externes décentralisés (DCS) B3. Ces données peuvent être personnalisées grâce à une simple feuille de calcul reliée aux canaux virtuels respectifs B17 qui correspondent aux canaux virtuels A5 de la Fig.1 eux-mêmes reproduits dans la mémoire de données RTGHMI B15. Cette opération est réalisée via un « multiplexeur » logiciel B10 qui fait partie de cette invention. Un exemple de canal virtuel de procédé est présenté en Fig. 3 et sera décrit en détail plus tard dans ce document. Lorsque le flux de données a été activé et personnalisé , les canaux respectifs peuvent être reliés aux blocs de fonctions désirés situés dans la zone mémoire B16 du RTGHMI grâce à de multiplexeurs semblables B11 issus soit de la mémoire locale RTGHMI B12 ou directement de la mémoire des canaux virtuels B17 du PLC (correspondant à la référence A5 à la Fig. 1). Les modules RTGHMI couvrent principalement les fonctionnalités typiques offertes par les interfaces homme-machine telles que les vues de procédé B4, les courbes de tendances B5, la gestion des alarmes B6 et d'autres fonctions plus spécialisées intégrées dans cette invention comme le contrôle et suivi à distance B7, le report d'alarmes via Texte ou messagerie Email B8.

Il est aussi important de noter que, pour le RTGHMI également, au moment de la production, toutes les sources de données B14 de même que les canaux virtuels de procédé B11/B12 et les modules de fonction B16 sont pré-chargés, mais à disposition de l'utilisateur et livrés en mode d'exécution à l'utilisateur final de sorte que l'unité elle-même est déjà en mode opérationnel lors de son premier démarrage. L'étape de personnalisation consiste dès lors uniquement en activant les liens du multiplexeur venant et partant des canaux virtuels ou en mots plus simples d'alimenter les modules de fonction en données temps réel de procédé à la place des canaux virtuels définis à l'étape de production. Ceci signifie également que ni l'utilisation de la mémoire du RTGHMI ni le temps d'exécution du RTGHMI ne seront impactés par la personnalisation de l'unité puisque toutes les fonctions sont activées déjà au premier démarrage.

La Fig. 3 se rapporte à la définition d'une structure typique de canal virtuel. Dans le cas de cet exemple, un canal analogique matériel a été reproduit.

Les composants de la structure ont été triés par type et par ordre alphabétique. La plupart des paramètres consistent en bascules binaires (booléen) mais d'autres incluent un index de multiplexage (type entier) ou même des attributs de texte (chaines de caractères) pour des applications d'affichage. La plupart des éléments parlent d'eux-mêmes. Pointons simplement les attributs d'adresse matérielle (type entier) nécessaires à l'identification des entrées / sorties matérielles qui peuvent être accompagnées d'une adresse de station éventuelle dans le cas de configuration à stations multiples, ou bien d'un pointeur d'enregistrement (type entier) pour un bus de terrain ou des échanges de données par procédé de communication asynchrone. Bien entendu ces canaux incluent les valeurs de procédé respectives dans le format attendu (point flottant) and dans les unités d'engineering appropriées, accompagnées de quelques valeurs statistiques usuelles générées à la demande par le générateur de calcul. Une telle structure de canal se reproduit pour les différents types de canaux nécessaires au système d'automatisation. L'accès via feuille de calcul permet une personnalisation extrêmement simplifiée de tous ces sélecteurs ou multiplexeurs sur site. L'étape de personnalisation sera décrite dans les annexes suivantes.

En principe, tous les canaux sont évalués lors de chaque cycle d'exécution du RTGPLC (typiquement 2-5 msec/cycle) de sorte que tout changement dans les réglages du canal et bien entendu les valeurs instantanées du procédé sont directement rapportées au module de contrôle respectif.

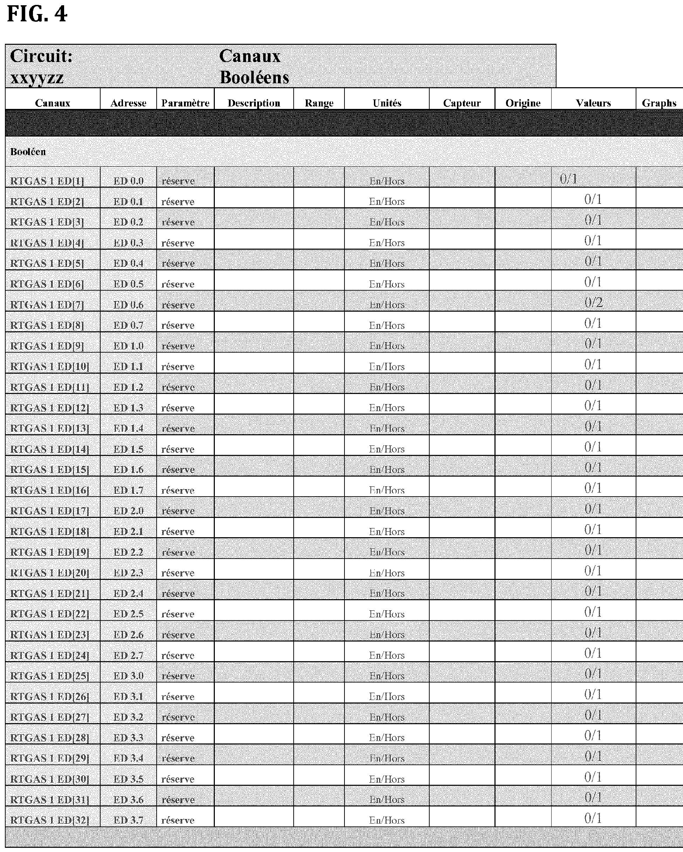

La Fig. 4 représente un exemple de feuille de personnalisation d'un canal booléen. Cette feuille peut être utilisée en tant que telle pour personnaliser la base de données du RTGPLC puisque tous les paramètres nécessaires à la caractérisation des canaux et à la mise en action des modules de fonctions y sont présents. On y retrouve notamment l'identification du canal (RTGAQ (index)), l'adresse matérielle (Adresse) de la valeur de procédé (le seul lien matériel vers le matériel RTGPLC), sa description en clair, les unités d'engineering relatées, (unités), le type de capteur relié (capteur) pour l'affichage sur l'écran de contrôle, la valeur de la variable (Spam) et les enregistrements historiques si nécessaire (Graphs). Lorsque cette feuille a été définie et complétée pour tous les canaux booléens et analogiques en entré et sortie de procédé ensemble avec les canaux internes utilisés pour d'éventuels calculs internes, tous les modules fonctionnels pré chargés dans le système seront reliés au procédé temps réel et activeront un contrôle temps réel pour les 8 boucles de contrôle disponible par armoire de contrôle.

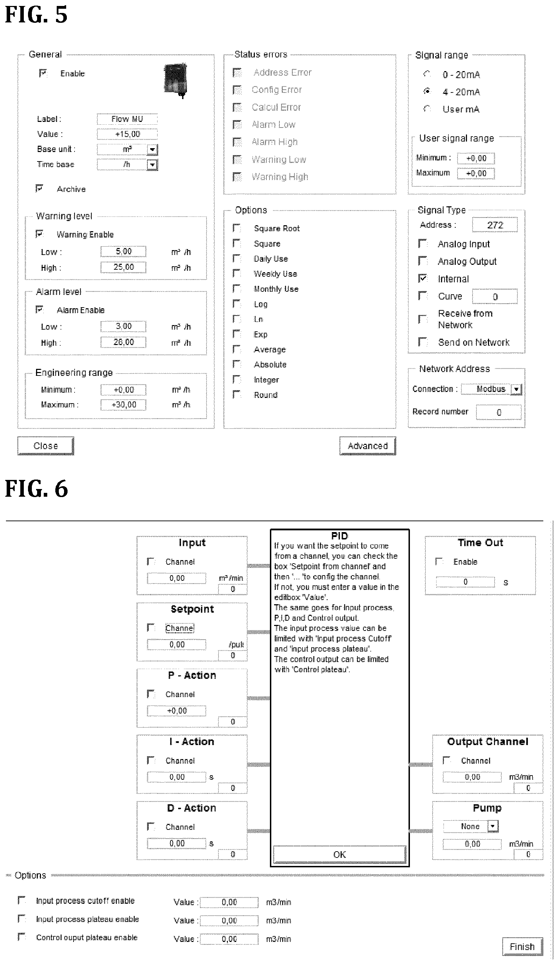

Les Fig. 5 et 6 représentent un exemple d'assistant de configuration respectivement pour un canal analogique et une boucle de contrôle (PID).

La personnalisation de canal analogique représenté en Fig. 5 constitue la première étape de la paramétrisation d'une unité RTGAS. Elle permet de relier les canaux virtuels prédéfinis à des variables de procédé ' temps réel' ou éventuellement à des variables calculées intermédiaires. Les canaux personnalisés de la sorte permettront à l'étape 2 l'activation des modules de contrôle prédéfinis dans le RTGPLC et reliés à présent vers des paramètres d'entrée / sortie physiques du procédé. L'assistant de personnalisation vous guide à travers les différentes étapes du modèle :
1. La section gauche du modèle présente les valeurs caractéristiques des canaux telles que les symboles graphiques y liés, les étiquettes, les unités d'engineering, les alarmes et leurs niveaux de déclenchement et les fenêtres de variation des variables.
2. La section centrale affiche d'éventuelles erreurs de personnalisation ainsi que les options possibles de mise à l'échelle ou de linéarisation.
3. La section droite du modèle présente les réglages matériels disponibles (signaux électriques et adresse physique matérielle) ainsi que les réglages nécessaires aux bus de terrain prédéfinis que sont Modbus et Profibus.

Chaque paramètre de personnalisation est directement écrit dans la base de données du RTGPLC, sa cohérence est instantanément vérifiée et un statut d'erreur éventuel rapporté. Si le lien est de type matériel, la valeur correspondante du procédé est directement affichée dans le modèle de personnalisation.

Le modèle de personnalisation du module de contrôle appelé PID représenté en Fig. 6 représente la seconde étape de la paramétrisation du RTGAS. Il permet l'activation en procédé des modules de contrôle suite à l'allocation des paramètres d'entrée et sortie vers ces modules de contrôle. Par définition même du RTGAS, toutes les actions de personnalisation prennent effet directement de telle façon que ces personnalisations ne font courir aucun risque d'interruption au procédé

L'assistant de personnalisation vous guide au travers des 3 sections du modèle :
La section de gauche vous permet de relier les paramètres d'entrée au module de contrôle. Les sources de données de procédé peuvent être soit :
   - un canal analogique physique
   - Un canal calculé fait de combinaisons de différents autres canaux
   - Une valeur délivrée par un bus de terrain Profibus ou Modbus.
   - Le point de consigne (manuel, entrée analogique ou issu d'un bus de terrain Modbus/Profibus) sera introduit comme une valeur de départ avec sa description et ses unités.
   - Les paramètres P, I et D seront soit introduits manuellement ou via des variable provenant des bus de terrain Profibus/Modbus.
   - Chacun des paramètres P, I et D pourra être activé ou désactivé.
   - Des actionneurs Tout ou Rien pourront être utilisés en mode PID grâce au module additionnel PWM sortie modulée en fréquence.
   - Une sécurité de durée maximale sera personnalisable sous forme d'une durée maximale d'activation du maximum de la sortie de PID.
   - La sécurité de durée maximale lorsqu'activée réinitialisera l'action du PID et la maintiendra à zéro jusqu'au prochain reset manuel.

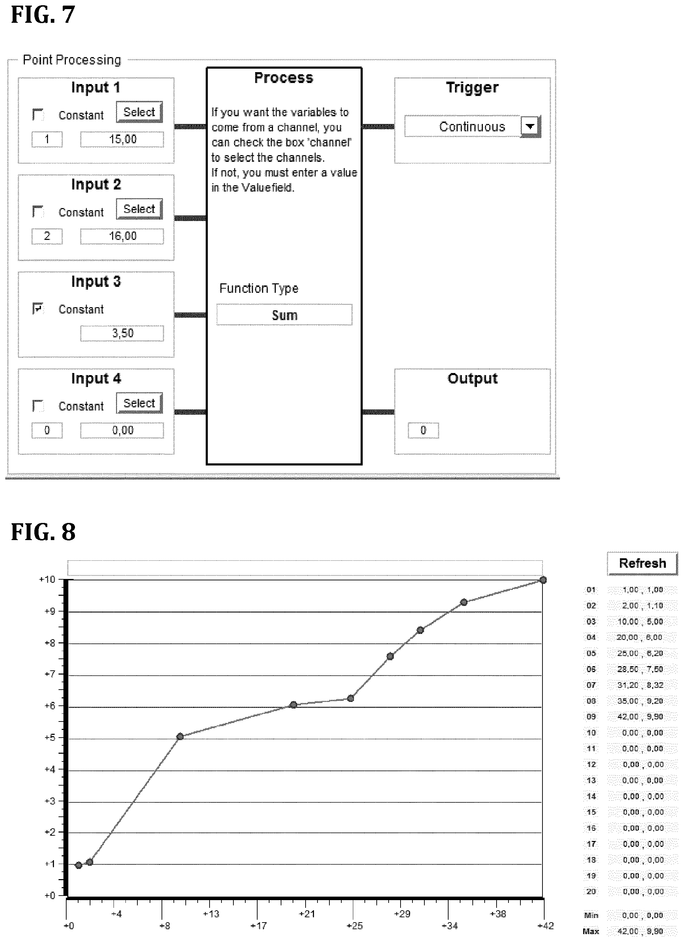

La Fig. 7 représente un exemple d'assistant de personnalisation d'un canal du moteur de calcul.

La personnalisation des canaux de calcul représente la troisième étape de la personnalisation du RTGAS.

Dans la méthode de réalisation décrite dans le cadre de cette invention, le calcul permet de combiner jusqu'à 4 canaux grâce à des fonctions avances mathématiques, booléennes, statistiques dans le but de réaliser des calculs intermédiaires qui pourront être réinjectés dans la suite des opérations de contrôle. Une vérification continue sur la validation des calculs de sorte à éviter des erreurs communes telles que des divisons par zéro ou des dépassements de valeurs.

L'assistant de personnalisation vous guide au travers des 3 sections de ce modèle :
Le moteur de calcul opère sur un maximum de 4 paramètres d'entrée et sa formulation est représentée par cette fonction (sortie=f (entrée1, entrée2, entrée3, entrée4)), f représentant la fonction appliquée aux 4 paramètres d'entrée afin de calculer une valeur de sortie.

La section à gauche du modèle personnalise soit les entrées constantes ou les valeurs de canaux.

La section centrale (Procédé) présente les fonctions de calcul disponibles que l'on peut sélectionner via un menu déroulant parmi ∼20 fonctions mathématiques ou statistiques disponibles dans les modules RTCPLC.

La section à droite du modèle présente les modes de déclencheurs disponibles pour activer l'exécution cyclique du moteur de calcul.

Cette section permet également de personnaliser les canaux de sorties principaux et de copie, ce dernier servant à effectuer de l'archivage historique ou du tracé sur traceur analogique.

La Fig. 8 représente un exemple d'un assistant de configuration de courbes multi points.
L'algorithme de courbes multi points selon un mode de réalisation repris dans l'invention est une stratégie de contrôle unique qui fait partie de cette invention.
Cet algorithme peut être joint aux stratégies de contrôle plus traditionnelles que sont le contrôle proportionnel, le PID, le calendaire ou minuteur, le tout ou rien avec bande morte ou encore la sortie impulsionnelle en modulation en fréquence et ce pour les procédés dont la fonction de transfert est soit inconnue soit malaisée à modéliser (excès de variables indépendantes) ou soumise à des fortes variations temporelles, saisonnières etc... Cet algorithme copie la bonne vieille recette des blocs note d'opérateurs dans lequel se retrouvait les recettes d'expériences de réglages du procédé selon les conditions de fonctionnement. L'algorithme apporte la puissance d'interaction de multiples variables sur un point de consigne. Chaque variable de procédé (max. de 36 variables par boucle de contrôle) peut potentiellement influencer le point de consigne calculé via cet algorithme. Chaque courbe (X,Y) de transfert peut être construite par 20 segments linéaires définis de façon graphique par l'opérateur sur son interface homme machine.

L'outil unique de contrôle Multi courbe du RTGAS peut être utilisé en association par exemple avec un contrôleur suiveur qui tirera sa consigne des courbes de modélisation du procédé.

Le RTGAS permet d'utiliser un maximum de 36 courbes à 20 segments linéaires définies par l'utilisateur. Chaque courbe définit une relation entre une variable de procédé ou une variable interne et une sortie de courbe qui pourra être utilisée par la suite comme nouveau point de consigne ou facteur de gain dans le moteur de calcul. Ces courbes sont stockées dans la base de données du RTGPLC et peuvent être personnalisées via un simple outil de feuille de calcul

## Revendications

1. Méthode d'implémentation du système d'automatisation pour la configuration instantanée sans aucune étape préliminaire de développement ou de compilation et la mise en oeuvre d'un PLC (2) à la façon d'un contrôleur temps réel de procédé virtuel comprenant les étapes suivantes :
- Allouer un premier espace mémoire (4, A12) dans la mémoire du PLC au stockage permanent de modules de code exécutable (A6, A7, A8, A9), lesdits modules de code exécutable (A6, A7, A8, A9) étant exécutés de façon continue et comprenant au moins un algorithme de contrôle de procédé ;
- Allouer un second espace mémoire (3, A11) de taille fixe dans la mémoire du PLC au stockage d'une base de données de canaux virtuels de procédé (A5) comprenant l'environnement d'exécution desdits modules de code exécutable, lesdits canaux virtuels de procédé (A5) liant des sources de données de procédé (A1, A2, A3, A4) auxdits modules de code exécutable (A6, A7, A8, A9) qui sont initialisés avec des valeurs permettant un mode opératoire fonctionnel du PLC même si le PLC n'est pas physiquement connecté aux sources de données du procédé;
- Permettre une paramétrisation en temps réel des canaux virtuels de procédé (A5) en fournissant un accès vers ladite base de données de canaux virtuels de procédé (A5), ladite paramétrisation étant restreinte à un certain nombre d'opérations licites qui lient lesdits modules de code (A6, A7, A8, A9) à des sources de données de procédé compatibles (A1, A2, A3, A4) et ladite paramétrisation n'entrainant pas de génération de code exécutable ni d'extension du second espace mémoire (3, A11) ;
- Synchroniser en temps réel la mémoire de travail du PLC avec un module électronique (5) qui comprend une zone de mémoire de données (6, B15) et une zone de mémoire de code exécutable (7, B16), ledit module électronique (5) se comportant comme une interface homme-machine entre un opérateur et le PLC(2), ladite synchronisation conduisant à une paramétrisation de la zone mémoire de données (B15) dudit module électronique (5), ladite paramétrisation adaptant l'interface homme-machine selon la configuration du PLC (2) ;
- Mettre en oeuvre les modules de code (A6, A7, A8, A9) liés aux sources de données de procédé (A1, A2 , A3, A4) .

2. Méthode d'implémentation du système d'automatisation selon la revendication 1, **caractérisée en ce que** lesdites sources de données de procédé comprennent des entrées / sorties physiques, des données transitant par bus de terrain Profibus ou liaison asynchrone Modbus, une valeur calculée par ledit moteur de calcul, une entrée manuelle de l'opérateur ou toute combinaison des possibilités précédentes.

3. Méthode d'implémentation du système d'automatisation selon l'une des revendications précédentes **caractérisée en ce que** lesdits modules de code exécutables (A6, A7, A8, A9) comprennent au moins l'un des modules de moteur de calcul, de vérification de débit et de gestion d'alarmes.

4. Méthode d'implémentation du système d'automatisation selon la revendication 3, **caractérisée en ce que** les valeurs calculées par ledit moteur de calcul (A7) sont évaluées de façon cyclique selon un intervalle de temps défini par l'utilisateur.

5. Méthode d'implémentation du système d'automatisation selon l'une des revendications précédentes, **caractérisée en ce que** la paramétrisation des canaux virtuels (A5) s'effectue via une méthode de guidance assistée.

6. Méthode d'implémentation du système d'automatisation selon l'une des revendications précédentes, **caractérisée en ce que** lesdits modules de code exécutable ainsi que l'exécution du contrôle de procédé ne sont pas perturbés ni interrompus durant l'étape de paramétrisation.

7. Méthode d'implémentation du système d'automatisation selon l'une des revendications précédentes, **caractérisée en ce que** lesdits modules de code comprennent un module de régulation qui adapte le point de consigne de dosage d'un produit liquide en fonction d'au moins un des paramètres variables suivants: la densité du produit dosé, la température dudit produit, la tension électrique d'alimentation de la pompe de dosage, la pression amont/aval dudit produit et la tuyauterie du circuit de dosage.

8. Méthode d'implémentation du système d'automatisation selon l'une des revendications précédentes, **caractérisée en ce que** le PLC se connecte de façon autonome à un réseau composé de jusqu'à 8 PLC et est automatiquement reconnu par l'interface homme-machine du réseau via un bus de données de terrain dédicacé, des messages pré-formatés de données étant échangés entre les stations détectées et permettant des échanges de données personnalisables.

9. Méthode d'implémentation du système d'automatisation selon l'une des revendications précédentes, **caractérisée en ce que** les opérations licites à l'étape de paramétrisation sont vérifiées en continu par une fenêtre de consistance qui vérifie les données entrées dans la base de données de canaux virtuels de procédé (A5) en empêchant tout encodage erroné ou illicite et en conséquence protège de la sorte entièrement l'intégrité opérationnelle du PLC (2).

10. Méthode d'implémentation du système d'automatisation selon l'une des revendications précédentes, **caractérisée en ce que** la paramétrisation des canaux de procédé virtuels de procédé (A5) est effectuée via les fonctionnalités d'une technique OLE (Object link embedded) pour contrôle de procédé.

11. Méthode d'implémentation du système d'automatisation selon l'une des revendications précédentes, **caractérisée en ce que** la paramétrisation de la zone de mémoire de données (6, B15) du module électronique (5) agissant comme interface homme-machine consiste en la réplication des canaux virtuels (A5) stockés dans l'espace mémoire (3, A11) du PLC(2).

12. Méthode d'implémentation du système d'automatisation selon l'une des revendications précédentes, **caractérisée en ce que** le module électronique servant d'interface homme-machine est intégré au PLC (2) dans une même armoire électrique comprenant un écran.

13. Méthode d'implémentation du système d'automatisation selon l'une des revendications 1 à 11, **caractérisée en ce que** le module électronique (5) agissant comme interface homme-machine est un ordinateur personnel connecté au PLC (2).

14. PLC (2) qui implémente la méthode selon l'une des revendications précédentes.

## Patentansprüche

1. Verfahren zum Implementieren eines Automatisierungssystems zur sofortigen Konfiguration ohne vorbereitenden Entwicklungs- oder Kompilierungsschritt und zum Einsatz einer SPS (2) nach Art eines Echtzeit-Reglers für virtuelle Prozesse, umfassend folgende Schritte:
- Zuteilen eines ersten Speicherplatzes (4, A12) in dem Speicher der SPS zur permanenten Speicherung von ausführbaren Codemodulen (A6, A7, A8, A9), wobei die ausführbaren Codemodule (A6, A7, A8, A9) ununterbrochen ausführbar sind und mindestens einen Prozesssteuerungsalgorithmus umfassen;
- Zuteilen eines zweiten Speicherplatzes (3, A11) fester Größe in dem Speicher der SPS zur Speicherung einer Datenbank mit virtuellen Prozesskanälen (A5), welche die Ausführungsumgebung der ausführbaren Codemodule umfasst, wobei die virtuellen Prozesskanäle (A5) Prozessdatenquellen (A1, A2, A3, A4) mit den ausführbaren Codemodulen (A6, A7, A8, A9) verknüpfen, die mit Werten initialisiert werden, die eine funktionsfähige Betriebsart der SPS ermöglichen, selbst wenn die SPS nicht physisch an die Datenquellen des Prozesses angeschlossen ist;
- Erlauben einer Echtzeit-Parametrisierung der virtuellen Prozesskanäle (A5) durch Bereitstellen eines Zugriffs auf die Datenbank mit virtuellen Prozesskanälen (A5), wobei die Parametrisierung auf eine gewisse Anzahl von zulässigen Operationen eingeschränkt ist, welche die Codemodule (A6, A7, A8, A9) mit kompatiblen Prozessdatenquellen (A1, A2, A3, A4) verknüpfen, und wobei die Parametrisierung weder eine Generierung von ausführbarem Code noch einer Erweiterung des zweiten Speicherplatzes (3, A11) bedingt;
- Synchronisieren in Echtzeit des Arbeitsspeichers der SPS mit einem elektronischen Modul (5), das eine Datenspeicherzone (6, B15) und eine ausführbare Codespeicherzone (7, B16) umfasst, wobei sich das elektronische Modul (5) wie eine Mensch-Maschine-Schnittstelle zwischen einem Bediener und der SPS (2) verhält, wobei die Synchronisierung zu einer Parametrisierung des Datenspeicherplatzes (B15) des elektronischen Moduls (5) führt, wobei die Parametrisierung die Mensch-Maschine-Schnittstelle gemäß der Konfiguration der SPS (2) anpasst;
- Einsetzen der Codemodule (A6, A7, A8, A9), die mit den Prozessdatenquellen (A1, A2, A3, A4) verknüpft sind.

2. Verfahren zum Implementieren des Automatisierungssystems nach Anspruch 1, **dadurch gekennzeichnet, dass** die Prozessdatenquellen physische Ein-/Ausgänge, Daten, die über einen Profibus-Feldbus oder eine asynchrone Modbus-Verbindung gehen, einen Wert, der von der Rechen-Engine berechnet wird, eine manuelle Eingabe des Bedieners oder eine beliebige Kombination der vorstehenden Möglichkeiten umfassen.

3. Verfahren zum Implementieren des Automatisierungssystems nach einem der vorhergehenden Ansprüche, **dadurch gekennzeichnet, dass** die ausführbaren Codemodule (A6, A7, A8, A9) mindestens eines der Module der Rechen-Engine, der Durchsatzprüfung und der Alarmverwaltung umfassen.

4. Verfahren zum Implementieren des Automatisierungssystems nach Anspruch 3, **dadurch gekennzeichnet, dass** die Werte, die von der Rechen-Engine (A7) berechnet werden, gemäß einem vom Benutzer definieren Zeitintervall zyklisch ausgewertet werden.

5. Verfahren zum Implementieren des Automatisierungssystems nach einem der vorhergehenden Ansprüche, **dadurch gekennzeichnet, dass** die Parametrisierung der virtuellen Kanäle (A5) anhand eines Unterstützungsverfahrens erfolgt.

6. Verfahren zum Implementieren des Automatisierungssystems nach einem der vorhergehenden Ansprüche, **dadurch gekennzeichnet, dass** die ausführbaren Codemodule sowie die Ausführung der Prozesssteuerung während des Parametrisierungsschrittes weder gestört noch unterbrochen werden.

7. Verfahren zum Implementieren des Automatisierungssystems nach einem der vorhergehenden Ansprüche, **dadurch gekennzeichnet, dass** die Codemodule ein Regelungsmodul umfassen, das den Dosierungssollwert eines flüssigen Produkts in Abhängigkeit von mindestens einem der folgenden variablen Parameter anpasst: der Dichte des dosierten Produkts, der Temperatur des Produkts, der elektrischen Versorgungsspannung der Dosierpumpe, des stromaufwärtigen/stromabwärtigen Drucks des Produkts und der Rohrleitung des Dosierungskreislaufs.

8. Verfahren zum Implementieren des Automatisierungssystems nach einem der vorhergehenden Ansprüche, **dadurch gekennzeichnet, dass** sich die SPS selbstständig an ein Netz anschließt, das aus bis zu 8 SPS besteht, und von der Mensch-Maschine-Schnittstelle des Netzes anhand eines dedizierten Felddatenbusses automatisch erkannt wird, wobei vorformatierte Datennachrichten zwischen den detektierten Stationen ausgetauscht werden und einen personalisierbaren Datenaustausch ermöglichen.

9. Verfahren zum Implementieren des Automatisierungssystems nach einem der vorhergehenden Ansprüche, **dadurch gekennzeichnet, dass** die zulässigen Operationen in dem Parametrisierungsschritt ununterbrochen von einem Kohärenzfenster überprüft werden, das die Daten überprüft, die in die Datenbank mit virtuellen Prozesskanälen (A5) eingegeben werden, wobei jegliche fehlerhafte oder unzulässige Codierung verhindert wird und folglich die Betriebsintegrität der SPS (2) vollständig geschützt wird.

10. Verfahren zum Implementieren des Automatisierungssystems nach einem der vorhergehenden Ansprüche, **dadurch gekennzeichnet, dass** die Parametrisierung der virtuellen Prozesskanäle (A5) anhand der Funktionalitäten einer Objekt-Verknüpfungs- und Einbettungs- (OLE) Technik zur Prozesssteuerung erfolgt.

11. Verfahren zum Implementieren des Automatisierungssystems nach einem der vorhergehenden Ansprüche, **dadurch gekennzeichnet, dass** die Parametrisierung der Datenspeicherzone (6, B15) des elektronischen Moduls (5), das als Mensch-Maschine-Schnittstelle dient, aus der Replikation der virtuellen Kanäle (A5) besteht, die in dem Speicherplatz (3, A11) der SPS (2) gespeichert sind.

12. Verfahren zum Implementieren des Automatisierungssystems nach einem der vorhergehenden Ansprüche, **dadurch gekennzeichnet, dass** das elektronische Modul, das als Mensch-Maschine-Schnittstelle dient, in der SPS (2) in demselben Schaltschrank, der einen Bildschirm umfasst, integriert ist.

13. Verfahren zum Implementieren des Automatisierungssystems nach einem der Ansprüche 1 bis 11, **dadurch gekennzeichnet, dass** das elektronische Modul (5), das als Mensch-Maschine-Schnittstelle dient, ein PC ist, der an die SPS (2) angeschlossen ist.

14. SPS (2), die das Verfahren nach einem der vorhergehenden Ansprüche implementiert.

## Claims

1. A method for implementing the automation system for the instantaneous configuration, with no prior development or compilation steps, and implementation of a PLC (2) like a real-time controller for a virtual process comprising the following steps:
- Allocating a first memory space (4, A12) in the memory of the PLC to the permanent storage of executable code modules (A6, A7, A8, A9), said executable code modules (A6, A7, A8, A9) being executed continuously and comprising at least one process control algorithm;
- Allocating a second memory space (3, A11) with a fixed size in the memory of the PLC to the storage of a database of virtual process channels (A5) comprising the execution environment of said executable code modules, said virtual process channels (A5) linking process data sources (A1, A2, A3, A4) to said executable code modules (A6, A7, A8, A9), which are initialized with values allowing a functional operating mode of the PLC even if the PLC is not physically connected to the process data sources;
- Allowing a real-time parameterization of the virtual process channels (A5) by providing access to said database of virtual process channels (A5), said parameterization being restricted to a certain number of legal operations that link said code modules (A6, A7, A8, A9) to compatible process data sources (A1, A2, A3, A4) and said parameterization not causing the generation of executable code or the extension of the second memory space (3, A11);
- Synchronizing the working memory of the PLC in real time with an electronic module (5) that comprises a data memory zone (6, B15) and an executable code memory zone (7, B16), said electronic module (5) behaving like a man-machine interface between an operator and the PLC (2), said synchronization leading to a parameterization of the data memory zone (B15) of said electronic module (5), said parameterization adapting the man-machine interface according to the configuration of the PLC (2);
- Implementing the code modules (A6, A7, A8, A9) linked to the process data sources (A1, A2, A3, A4).

2. The method for implementing the automation system according to claim 1, **characterized in that** said process data sources comprise physical inputs / outputs, data passing through Profibus fieldbus or Modbus asynchronous link, a value computed by said computing engine, a manual input from the operator or any combination of the above possibilities.

3. The method for implementing the automation system according to one of the preceding claims, **characterized in that** said executable code modules (A6, A7, A8, A9) comprise at least one of the computing engine, throughput verification and alarm management modules.

4. The method for implementing the automation system according to claim 3, **characterized in that** the values computed by said computing engine (A7) are assessed cyclically according to a time interval defined by the user.

5. The method for implementing the automation system according to one of the preceding claims, **characterized in that** the parameterization of the virtual channels (A5) is done via an assisted guidance method.

6. The method for implementing the automation system according to one of the preceding claims, **characterized in that** said executable code modules as well as the execution of the process control are not disrupted or interrupted during the parameterization step.

7. The method for implementing the automation method according to one of the preceding claims, **characterized in that** said code modules comprise a regulating module that adapts the setpoint for metering a liquid product based on at least one of the following variable parameters: the density of the metered product, the temperature of said product, the supply voltage of the metering pump, the upstream/downstream pressure of said product and the piping of the metering circuit.

8. The method for implementing the automation system according to one of the preceding claims, **characterized in that** the PLC connects autonomously to an array made up of up to 8 PLCs and is automatically recognized by the man-machine interface of the array via a dedicated data fieldbus, preformatted data messages being exchanged between the detected stations and allowing customizable data exchanges.

9. The method for implementing the automation system according to any one of the preceding claims, **characterized in that** the legal operations in the parameterization step are verified continuously by a consistency window that checks the data entered in the database of virtual process channels (A5) while preventing any erroneous or illegal coding and consequently fully protects the operational integrity of the PLC (2).

10. The method for implementing the automation system according to any one of the preceding claims, **characterized in that** the parameterization of the virtual process channels (A5) is done via the functionalities of an OLE (Object Link Embedded) technique for process control.

11. The method for implementing the automation system according to one of the preceding claims, **characterized in that** the parameterization of the data memory zone (6, B15) of the electronic module (5) acting as a man-machine interface consists of replicating virtual channels (A5) stored in the memory space (3, A11) of the PLC (2).

12. The method for implementing the automation system according to one of the preceding claims, **characterized in that** the electronic module serving as a man-machine interface is integrated into the PLC (2) in a same electrical cabinet comprising a screen.

13. The method for implementing the automation system according to one of claims 1 to 11, **characterized in that** the electronic module (5) acting as a man-machine interface is a personal computer connected to the PLC (2).

14. A PLC (2) that implements the method according to one of the preceding claims.
